# EUROPEAN PATENT SPECIFICATION

(11) **EP 3 496 514 B1**
(45) Date of publication and mention of the grant of the patent: **03.02.2021**
(21) Application number: 17205700.2
(22) Date of filing: 06.12.2017
(51) Int. Cl.: H05C 1/00, H02J 7/35, H05C 1/04

(54) **ELECTRIC FENCE ENERGIZER SYSTEM AND METHOD**
ELEKTROZAUNENERGIEVERSORGUNGSSYSTEM UND -VERFAHREN
SYSTÈME ET PROCÉDÉ D'ÉLECTRIFICATION DE CLÔTURE ÉLECTRIQUE

(43) Date of publication of application: 12.06.2019
(73) Proprietor: Gallagher Europe B.V., 9723 AZ Groningen (NL)
(72) Inventor: Dijkstra, Meindert Egbert, 9723 Groningen (NL)
(74) Representative: Eisenführ Speiser

(56) References cited:
- FR-A1- 2 604 324
- GB-A- 1 008 992
- JP-U- S5 778 238
- US-A- 5 617 002

## Description

The invention is directed to an electric fence energizer system, a method for this and the use of an electric fence energizer system.

Protective fences are known for preventing animals to enter or leave a separated area. According to the state of the art, different areas which are separated by protective fences are known. For example, areas like agricultural land are separated with protective fences in order to protect the livestock grazing on the land from wild animals existing in the region. Also, protective fences are used to keep the livestock together. In particular, in the dairy industry, protective fences are utilized in order to prevent milk cows from leaving a predefined fenced area.

Protective fences are often electrified to increase their efficiency. Further, electrification of protective fences is preferably used in agricultural areas, as construction of protective fences which are electrified can be much cheaper and faster than conventional fences because it uses plain wire and much lighter construction, as the fence does not need to physically restrain animals. The risk of injury to livestock is lower compared to fences made of barbed wire.

It is common to refer to electrified protective fences as electric fences. Electric fences are designed to create a closed electrical circuit when touched by an animal. A component called energizer system converts power into brief high voltage pulses. One terminal of the energizer system releases one electrical pulse along a connected bare wire, for example with a minimum from one pulse per second. Another terminal is connected to a metal rod implanted in the earth, called a ground or earth rod.

An animal touching the wire while having contact with the earth during a pulse will close an electrical circuit and will conduct the pulse, causing an electric shock. The effects of the shock depend upon the voltage and the energy of the pulse. Further, the degree of contact between the animal with the fence and the ground effects the shock. Consequently, a shock can range from barely noticeable to uncomfortable or even painful.

Different energizer systems are known. A stationary energizer system comprises a plug which can be connected with a socket of a domestic voltage supply to receive energy for providing the pulses. Depending on the area to be fenced and remoteness of its location, mobile energizer systems are known. Mobile energizer systems are connectable to a battery or an accumulator to receive energy for providing the pulses from the energy of the battery or the accumulator. In general, it is not preferred to use accumulators instead of batteries because their voltage suddenly breaks down after a certain discharge of the accumulator.

Thus, a mobile energizer system can be used in areas where a domestic voltage supply is not available.

However, the capacity of a battery is not sufficient to supply the energizer systems with energy over an entire summerseason in which animals graze. Therefore, the operator must regularly check the charging status of the battery or the accumulator and replace the battery or accumulator, if necessary.

Checking and replacing the battery or accumulator is challenging because on the one hand, a replacement of a battery which is still not unloaded causes unnecessary costs and work. On the other hand, replacement of a battery after the battery is unloaded leads to a period in which the fenced area is not electrified. Therefore, it is known from GB 1,008,992 A to provide an arrangement for energizing an electric fence according to the preamble of claim 1 comprising an accumulator which can be charged with a solar generator. Moreover, FR 2 604 324 A1 discloses an electric fence system comprising solar means.Consequently, it is an object of the present invention to provide a solution for the known disadvantages of the state of the art. In particular, it is an object of the present invention to provide a solution to electrify protective fences in areas where a domestic voltage supply is not available without the necessity of changing a battery or accumulator. In any event, it is an object of the present invention to provide an alternative to the prior art.

For this purpose, the invention comprises an electric fence energizer system for energizing an electric fence. The fence energizer system comprises an energizer unit which is connectable with a fence. The energizer unit preferably has an input to receive energy from an energy source and an output which is connectable to a fence to provide pulses for energizing the fence.

Moreover, the electric fence energizer system comprises connecting means for connecting the energizer unit with a battery. In addition, the electric fence energizer system comprises a solar module for converting sunlight into electrical energy.

Furthermore, the energizer system comprises a charging circuit. The charging circuit is adapted for receiving energy from the solar module and for providing charging energy to a battery which is connectable by the connecting means. Further, the charging circuit is adapted to provide a charging energy adapted to charge batteries comprising at least one primary cell.

Thus, the energizer system can use a battery with a primary cell which is also called non-chargeable. Consequently, the battery is of the type which would be destroyed when connected to a solar module, directly. According to the invention, the energizer system comprises a charging circuit for proving an adapted current and/or voltage to charge such a kind of normally non-chargeable battery.

Consequently, the battery is charged very slowly by the solar module which is no issue. In particular, the invention is based on the finding that in general, the charge of a battery is sufficient for the predominant portion of a season to provide energy for an electric fence. Thus, a low support by the solar module is sufficient for increasing the amount of charge of the battery to supply an energizer during the whole season. In addition, there is no need for an expensive accumulator which in any case has further disadvantages compared to batteries.

According to a first embodiment, the charging circuit comprises a current and/or voltage limiting circuit to limit the current and/or voltage of the charging energy provided by the solar module for charging the battery. Thereby, the energizer system is adapted for providing a charging energy adapted to charge batteries comprising at least one primary cell. Limiting the current and/or voltage of the charging energy ensures that the battery is not destroyed during charging.

According to a further embodiment, the current is limited by the charging circuit to a value below 0.5 Ampere during charging. Preferably, the current average is about or below 0.25 Ampere during charging. Thus, it is taken into account that the charging process is very slow, whereby this ensures that the battery is not destroyed and does not leak out.

According to a further embodiment, the solar module provides energy up to 5 watts. A solar module which provides energy below or up to 5 watts is very cheap on the one hand. On the other hand, such a solar module with a low power output does only provide an amount of energy which can be limited with respect to its current and/or voltage by the charging circuit using cheap components in the charging circuit.

According to a further embodiment, the charging circuit comprises at least one Zener diode. The at least one Zener diode is connected in parallel to the positive and negative terminals of the solar module in blocking direction. As a result, if the voltage of the solar module exceeds the Zener voltage, which is also called the break down voltage, current flows through the Zener diode and thus limits the current provided for charging the battery.

According to a further embodiment, the system is adapted to charge batteries with different voltages by selectable values of current and/or voltage limits of the limiting circuit. According to a special embodiment, the charging circuit comprises at least one Zener diode and at least one further Zener diode connected in series, wherein the further Zener diode can be bypassed by closing a switch.

Hence, by opening or closing the switch, a user can select the limiting value for limiting the current and/or voltage of the charging circuit in order to connect at least two different types of batteries which allow different maximum charging currents and/or voltages.

According to a further embodiment, the system comprises a container for housing the battery, wherein the container is battery-acid proof. This serves for the case that a user accidentally uses the same battery in the energizer system for several years. It is known that charging a battery is only possible a few times. If a certain number of charging processes, which depends on the manufacturer, is exceeded, the battery may leak out. The container prevents the system from being damaged by acid in case of leakage.

According to a further embodiment, the electric fence energizer system comprises a battery which is connected with the connecting means, wherein the battery is a 9-volt or 12-volt battery. Thus, the battery is part of the system.

According to a further embodiment, at least one primary cell of the battery is of the type of at least one of Alkaline-Cell, Aluminum-Air-Cell, Chromic-Acid-Cell, Lithium-Cell, Mercury-Cell, Nickel-Oxyhydroxide-Cell, Silicon-Air-Cell, Silver-Oxide-Cell, Zinc-Air-Cell and Zinc-Carbon-Cell. The above mentioned types of batteries are available as standard components and therefore, are cheap and available in large quantity.

According to a further embodiment, a battery which is connected with the connecting means has a capacity of about or more than 50 ampere hours, preferably more than 70 ampere hours. As an alternative of the embodiment, the system is configured to be connected to a battery with the connecting means which has a capacity of about or more than 50 ampere hours, preferably more than 70 ampere hours. Such large batteries provide sufficient energy when charged with the small charge through the solar module and the charge circuit to supply and support an electric fence over the whole season.

Further, the invention is directed to a method for charging a battery comprising at least one primary cell with an electric fence energizer system according to any of the above-mentioned embodiments of the electric fence energizer system.

Moreover, the invention is directed to a use of an electric fence energizer system according to any of the above-mentioned embodiments to charge and support a battery comprising at least one primary cell.

Further features and advantages of the invention arise from the following description of preferred embodiments, wherein reference is made to the drawings:
- Fig. 1: shows a schematic circuit diagram of the electric fence energizer system and
- Fig. 2: shows a schematic circuit diagram of the charging circuit.

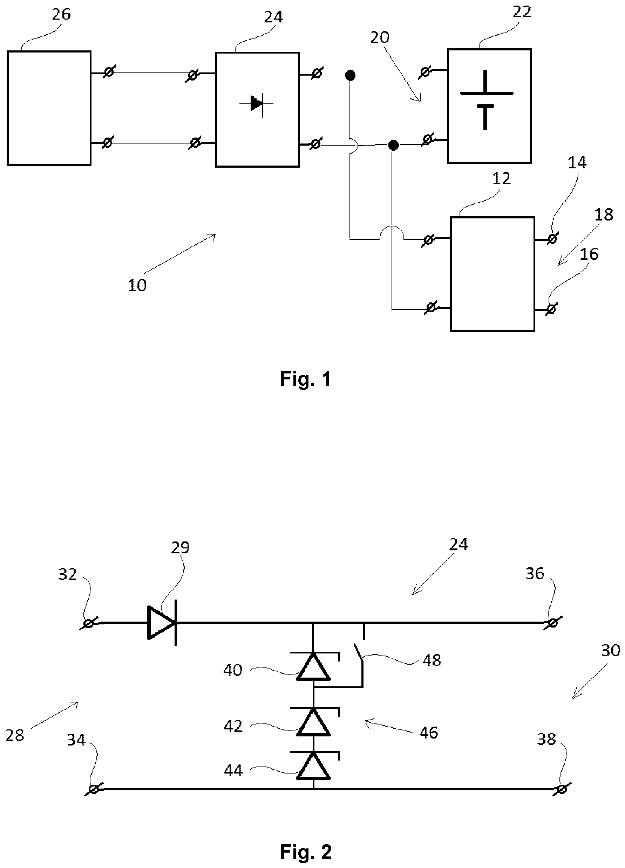

Fig. 1 shows a schematic circuit diagram of an embodiment of the electric fence energizer system 10. The system 10 comprises an energizer unit 12 which can be connected with a fence by a fist terminal 14 and the ground by a second terminal 16. The first terminal 14 and the second terminal 16 form an output 18 of the electric fence energizer system 10.

The energizer unit 12 generates voltage pulses which are put out through the output 18. The voltage pulses are generated with the energy which the electric fence energizer system 10 receives through connecting means 20 which are connected with a battery 22. The battery 22 comprises at least one primary cell.

Moreover, the battery 22 is connected through a charging circuit 24 with a solar module 26. With the incidence of sunlight, the solar module 26 provides electrical energy which is received by the charging circuit 24. The charging circuit 24 provides energy to the battery 22 which is adapted to charge the battery 22 which comprises at least one primary cell.

Fig. 2 shows a schematic circuit diagram of the charging circuit 24 according to an embodiment of the invention. The charging circuit 24 comprises an input 28 and an output 30.

The input 28 comprises a first terminal 32 to be connected with a positive pole of the solar module 26. Further, the input 28 comprises a second terminal 34 to be connected with a negative pole of the solar module 26. The output 30 comprises a first terminal 36 to be connected with a positive pole of the battery 22 and a second terminal 38 to be connected with a negative pole of the battery 22.

The second terminal 34 of the input 28 and the second terminal 38 of the output 30 are connected to each other directly. The first terminal 32 of the input 28 and the first terminal 36 of the output 30 are connect indirectly over a diode 29 which prevents a current flowing from the battery 22 into the solar module 26. Three Zener diodes 40, 42, 44 which are connected serially are arranged in parallel to the terminals 36, 38 of the output 30. The Zener diodes 40, 42, 44 are connected in blocking direction. The Zener diodes 40, 42, 44 form a limiting circuit 46.

Further, the charging circuit 24 comprises a switch 48 for bypassing one of the Zener diodes, namely Zener diode 40.

Thus, if the switch 48 is open and if the voltage of the solar module 26 exceeds the Zener voltage of the three diodes 40, 42, 44, current flows through the Zener diodes 40, 42, 44 and thus limits the current provided for charging the battery 22.

In case the switch 48 is closed, current flows through the Zener diodes 42 and 44 and thus limits the current provided for charging the battery 22 if the voltage of the solar module 26 exceeds the Zener voltage of the two diodes 42 and 44. Thus, by opening or closing the switch 48, a user can select the limiting value for limiting the current and/or voltage of the charging circuit 24 in order to connect at least two different types of batteries which allow different maximum charging currents or voltages.

### Reference numerals

- 10: electric fence energizer system
- 12: energizer unit
- 14: first terminal
- 16: second terminal
- 18: output of the system
- 20: connecting means
- 22: battery
- 24: charging circuit
- 26: solar module
- 28: input of the charging circuit
- 29: diode
- 30: output of the charging circuit
- 32: first terminal of input of the charging circuit
- 34: second terminal of input of the charging circuit
- 36: first terminal of output of the charging circuit
- 38: second terminal of output of the charging circuit
- 40: Zener diode
- 42: Zener diode
- 44: Zener diode
- 46: limiting circuit
- 48: switch

## Claims

1. Electric fence energizer system (10) for energizing an electric fence comprising:
- an energizer unit (12) connectable with a fence,
- connecting means (20) for connecting the energizer (12) unit with a battery (22),
- a solar module (26) for converting sunlight into electrical energy and
- a charging circuit (24) for receiving energy from the solar module (26) and for providing charging energy to a battery (22) which is connectable by the connecting means (20), **characterized in that** the charging circuit (24) is adapted to provide a charging energy adapted to charge batteries (22) comprising at least one primary cell.

2. Electric fence energizer system according to claim 1, wherein for providing a charging energy adapted to charge batteries (22) comprising at least one primary cell, the charging circuit (24) comprises a current and/or voltage limiting circuit (46) to limit the current of the charging energy provided by the solar module (26).

3. Electric fence energizer system according to claim 1 or 2, wherein the charging circuit (24) is adapted to limit the current which is received from the solar module (26) to a value below 0.5 Ampere, preferable the current average is about or below 0.25 Ampere.

4. Electric fence energizer system according to any of the preceding claims, wherein the solar module (26) provides energy up to 5 watts.

5. Electric fence energizer system according to any of the preceding claims, wherein the charging circuit (24) comprises at least one Zener diode (42, 44).

6. Electric fence energizer system according to any of the preceding claims, wherein the charging circuit (24) comprises at least one Zener diode (42, 44) and at least one further Zener diode (40) connected in series, wherein the further Zener (40) diode can be bypassed by closing a switch (48).

7. Electric fence energizer system according to any of the preceding claims, wherein the system (10) comprises a container for housing the battery (22), wherein the container is battery acid proof.

8. Electric fence energizer system according to any of the preceding claims, wherein the system (10) is adapted to charge batteries (22) with different voltages by selectable values of current and/or voltage limits of the limiting circuit.

9. Electric fence energizer system according to any of the preceding claims, wherein the system (10) comprises a battery (22) which is connected with the connecting means (20), wherein the battery is a 9-volt or 12-volt battery.

10. Electric fence energizer system according to claim 9, wherein the at least one primary cell of the battery (22) is of the type of at least one of Alkaline-Cell, Aluminum-Air-Cell, Chromic-Acid-Cell, Lithium-Cell, Mercury-Cell, Nickel-Oxyhydroxide-Cell, Silicon-Air-Cell, Silver-Oxide-Cell, Zinc-Air-Cell and Zinc-Carbon-Cell.

11. Electric fence energizer system according to any of the preceding claims, wherein a battery (22) which is connected with the connecting means (20) has a capacity of about or more than 50 ampere hours, preferably more than 70 ampere hours, or
wherein the system (10) is configured to be connected to a battery (22) with the connecting means (20) which has a capacity of about or more than 50 ampere hours, preferably more than 70 ampere hours.

12. Method for charging a battery (22) comprising at least one primary cell with an electric fence energizer system (10) according to any of the preceding claims.

13. Use of an electric fence energizer system (10) according to any of the claims 1 to 11 to charge a battery (22) comprising at least one primary cell.

## Patentansprüche

1. Elektrozaun-Energieversorgungssystem (10) zum Versorgen eines Elektrozauns mit Energie, umfassend:
- eine Energieversorgungseinheit (12), die mit einem Zaun verbindbar ist,
- Verbindungsmittel (20) zum Verbinden der Energieversorgungseinheit (12) mit einer Batterie (22),
- ein Solarmodul (26) zur Umwandlung von Sonnenlicht in elektrische Energie und
- eine Ladeschaltung (24) zum Empfangen von Energie von dem Solarmodul (26) und zum Bereitstellen von Ladeenergie für eine Batterie (22), die durch die Verbindungsmittel (20) verbindbar ist,
**dadurch gekennzeichnet, dass**
die Ladeschaltung (24) eingerichtet ist, eine Ladeenergie bereitzustellen, die zum Laden von Batterien (22) , die mindestens eine Primärzelle umfassen, eingerichtet ist.

2. Elektrozaun-Energieversorgungssystem nach Anspruch 1, wobei die Ladeschaltung (24) zum Bereitstellen einer Ladeenergie, die eingerichtet ist, Batterien (22), die mindestens eine Primärzelle umfassen, zu laden, eine Strom- und/oder Spannungsbegrenzungsschaltung (46) zur Begrenzung des Stroms der Ladeenergie, die von dem Solarmodul (26) bereitgestellt wird, aufweist.

3. Elektrozaun-Energieversorgungssystem nach Anspruch 1 oder 2, wobei die Ladeschaltung (24) eingerichtet ist, den Strom, der von dem Solarmodul (26) erhalten wird, auf einen Wert unter 0,5 Ampere zu begrenzen, wobei vorzugsweise der Strom bei etwa oder unter 0,25 Ampere liegt.

4. Elektrozaun-Energieversorgungssystem nach einem der vorhergehenden Ansprüche, wobei das Solarmodul (26) eine Energie von bis zu 5 Watt liefert.

5. Elektrozaun-Energieversorgungssystem nach einem der vorhergehenden Ansprüche, wobei die Ladeschaltung (24) mindestens eine Zenerdiode (42, 44) aufweist.

6. Elektrozaun-Energieversorgungssystem nach einem der vorhergehenden Ansprüche, wobei die Ladeschaltung (24) mindestens eine Zenerdiode (42, 44) und mindestens eine weitere Zenerdiode (40), die in Serie geschaltet sind, umfasst, wobei die weitere Zenerdiode (40) durch Schließen eines Schalters (48) überbrückbar ist.

7. Elektrozaun-Energieversorgungssystem nach einem der vorhergehenden Ansprüche, wobei das System (10) einen Behälter zur Aufnahme der Batterie (22) aufweist, wobei der Behälter batteriesäurefest ist.

8. Elektrozaun-Energieversorgungssystem nach einem der vorhergehenden Ansprüche, wobei das System (10) eingerichtet ist, Batterien (22) mit unterschiedlichen Spannungen durch wählbare Werte von Strom- und/oder Spannungsgrenzen der Begrenzungsschaltung zu laden.

9. Elektrozaun-Energieversorgungssystem nach einem der vorhergehenden Ansprüche, wobei das System (10) eine Batterie (22) aufweist, die mit dem Verbindungsmittel (20) verbunden ist, wobei die Batterie eine 9-Volt- oder 12-Volt-Batterie ist.

10. Elektrozaun-Energieversorgungssystem nach Anspruch 9, wobei die mindestens eine Primärzelle der Batterie (22) von mindestens einem der Typen umfassend eine Alkalizelle, Aluminium-Luft-Zelle, Chromsäure-Zelle, Lithium-Zelle, Quecksilber-Zelle, Nickel-Oxyhydroxid-Zelle, Silizium-Luft-Zelle, Silber-Oxid-Zelle, Zink-Luft-Zelle und Zink-Kohle-Zelle ist.

11. Elektrozaun-Energieversorgungssystem nach einem der vorhergehenden Ansprüche, wobei eine Batterie (22), die mit dem Verbindungsmittel (20) verbunden ist, eine Kapazität von etwa oder mehr als 50 Amperestunden, vorzugsweise mehr als 70 Amperestunden, aufweist oder
wobei das System (10) eingerichtet ist, mit einer Batterie (22) durch das Verbindungsmittel (20) verbunden zu werden, die eine Kapazität von etwa oder mehr als 50 Amperestunden, vorzugsweise mehr als 70 Amperestunden, aufweist.

12. Verfahren zum Laden einer Batterie (22) umfassend mindestens eine Primärzelle mit einem Elektrozaun-Energieversorgungssystem (10) nach einem der vorhergehenden Ansprüche.

13. Verwendung eines Elektrozaun-Energieversorgungssystems (10) nach einem der Ansprüche 1 bis 11 zum Laden einer Batterie (22) umfassend mindestens eine Primärzelle.

## Revendications

1. Système d'électrification de clôture électrique (10) pour électrifier une clôture électrique comprenant :
- une unité d'électrification (12) apte à être connectée à une clôture,
- des moyens de connexion (20) pour connecter l'unité d'électrification (12) à une batterie (22),
- un module solaire (26) pour convertir de la lumière solaire en énergie électrique et
- un circuit de charge (24) pour recevoir de l'énergie à partir du module solaire (26) et pour fournir de l'énergie de charge à une batterie (22) qui est apte à être connectée par les moyens de connexion (20),
**caractérisé en ce que** le circuit de charge (24) est adapté pour fournir une énergie de charge adaptée pour charger des batteries (22) comprenant au moins une cellule primaire.

2. Système d'électrification de clôture électrique selon la revendication 1, dans lequel pour fournir une énergie de charge adaptée pour charger des batteries (22) comprenant au moins une cellule primaire, le circuit de charge (24) comprend un circuit de limitation de courant et/ou de tension (46) pour limiter le courant de l'énergie de charge fournie par le module solaire (26).

3. Système d'électrification de clôture électrique selon la revendication 1 ou 2, dans lequel le circuit de charge (24) est adapté pour limiter le courant qui est reçu à partir du module solaire (26) à une valeur inférieure à 0,5 ampère, de préférence la moyenne de courant est d'environ ou inférieure à 0,25 ampère.

4. Système d'électrification de clôture électrique selon l'une quelconque des revendications précédentes, dans lequel le module solaire (26) fournit une énergie allant jusqu'à 5 watts.

5. Système d'électrification de clôture électrique selon l'une quelconque des revendications précédentes, dans lequel le circuit de charge (24) comprend au moins une diode Zener (42, 44).

6. Système d'électrification de clôture électrique selon l'une quelconque des revendications précédentes, dans lequel le circuit de charge (24) comprend au moins une diode Zener (42, 44) et au moins une diode Zener supplémentaire (40) connectées en série, dans lequel la diode Zener supplémentaire (40) peut être court-circuitée par la fermeture d'un commutateur (48).

7. Système d'électrification de clôture électrique selon l'une quelconque des revendications précédentes, dans lequel le système (10) comprend un contenant pour loger la batterie (22), dans lequel le contenant est résistant à l'acide de batterie.

8. Système d'électrification de clôture électrique selon l'une quelconque des revendications précédentes, dans lequel le système (10) est adapté pour charger des batteries (22) avec différentes tensions par des valeurs aptes à être sélectionnées de limites de courant et/ou de tension du circuit de limitation.

9. Système d'électrification de clôture électrique selon l'une quelconque des revendications précédentes, dans lequel le système (10) comprend une batterie (22) qui est connectée aux moyens de connexion (20), dans lequel la batterie est une batterie 9 volts ou 12 volts.

10. Système d'électrification de clôture électrique selon la revendication 9, dans lequel l'au moins une cellule primaire de la batterie (22) est du type d'au moins l'une parmi une cellule alcaline, une cellule aluminium-air, une cellule à l'acide chromique, une cellule au lithium, une cellule au mercure, une cellule à l'oxyhydroxyde de nickel, une cellule silicium-air, une cellule à l'oxyde d'argent, une cellule zinc-air et une cellule zinc-carbone.

11. Système d'électrification de clôture électrique selon l'une quelconque des revendications précédentes, dans lequel une batterie (22) qui est connectée aux moyens de connexion (20) possède une capacité d'environ ou de plus de 50 ampères-heures, de préférence de plus de 70 ampères-heures, ou
dans lequel le système (10) est configuré pour être connecté à une batterie (22) avec les moyens de connexion (20) qui possède une capacité d'environ ou de plus de 50 ampères-heures, de préférence de plus de 70 ampères-heures.

12. Procédé de charge d'une batterie (22) comprenant au moins une cellule primaire avec un système d'électrification de clôture électrique (10) selon l'une quelconque des revendications précédentes.

13. Utilisation d'un système d'électrification de clôture électrique (10) selon l'une quelconque des revendications 1 à 11 pour charger une batterie (22) comprenant au moins une cellule primaire.
